# EUROPÄISCHE PATENTANMELDUNG

(11) **EP 4 223 104 A1**
(43) Veröffentlichungstag der Anmeldung: **09.08.2023**
(21) Anmeldenummer: 22215061.7
(22) Anmeldetag: 20.12.2022
(51) Int. Cl.: A01F 15/08, A01F 15/10

(54) **QUADERBALLENPRESSE SOWIE VERFAHREN ZUM BETREIBEN EINER QUADERBALLENPRESSE**

(30) Priorität: 03.02.2022 DE 102022102598
(71) Anmelder: Usines CLAAS France S.A.S, 57140 St. Rémy / Woippy (FR)
(72) Erfinder: Rongvaux, Laurent, 54800 Tronville (FR); Grosnickel, Rémi, 57530 Colligny (FR)
(74) Vertreter: CLAAS Gruppe

(57) **Zusammenfassung**

Die vorliegende Erfindung betrifft eine Quaderballenpresse (10), umfassend einen Zuführkanal (30), der einen Einlaufbereich (30a), in den von einer Aufnahmevorrichtung (20) aufgenommenes Erntegut (16) eintritt, und einen Auslaufbereich (30b) aufweist, der in einen Presskanal (32) einmündet, in dem ein Presskolben (26) oszillierend bewegbar ist, um Erntegut (16) schichtweise zu einem Ballen (18) zu verdichten, wobei in dem Zuführkanal (30) ein Raffer (24) zwischen einer Erntegut (16) in dem Zuführkanal (30) verdichtenden Sammelhubbewegung und einer das Erntegut (16) von dem Zuführkanal (30) in den nachgeordneten Presskanal (32) verlagernden Füllhubbewegung umschaltbar ist, wobei die Quaderballenpresse (10) eine Steuereinheit (44) umfasst, die dazu eingerichtet ist, Daten einer Vielzahl von Sensoren (48) der Quaderballenpresse (10) zu empfangen, die Betriebsparameter der Quaderballenpresse (10) repräsentieren, und aus diesen Daten unter Verwendung eines lernfähigen, auf künstlicher Intelligenz basierenden Algorithmus ein Gewicht (74) einer in dem Presskanal (32) verdichteten Erntegutschicht (50) zu bestimmen.

## Beschreibung

Die vorliegende Erfindung betrifft eine Quaderballenpresse gemäß dem Oberbegriff des Anspruches 1. Weiterhin betrifft die Erfindung ein Verfahren zum Betreiben einer Quaderballenpresse gemäß dem Oberbegriff des Anspruches 14.

Für den Herstellvorgang eines Ballens kann zur Ansteuerung der Verdichtungskraft, mit welcher Erntegutschichten zu einem Ballen verdichtet werden, das zu erzielende Gewicht des Ballens herangezogen werden. Im Allgemeinen erfolgt die Bestimmung des Gewichts eines fertiggestellten Ballens mittels einer Wiegevorrichtung an der Quaderballenpresse, die an der Ballenrampe angeordnet oder dieser zugeordnet ist.

Aus der EP 2 477 475 B1 ist eine Quaderballenpresse gemäß dem Oberbegriff des Anspruches 1 sowie ein Verfahren zum Betreiben der Quaderballenpresse gemäß dem Oberbegriff des Anspruches 14 bekannt. Zur Gewichtsbestimmung eines fertiggestellten Ballens sind zwei physische Sensoren vorgesehen, ein Sensor zur Messung des Gewichtes von fertigen Ballen im rückwärtigen Bereich der Quaderballenpresse sowie ein Dichtesensor im Zuführkanal oder im Aufnahmebereich des nachgeordneten Presskanals, mit welchem die relative Dichte von Erntematerial-Scheiben respektive Erntegutschichten gemessen wird. Die Quaderballenpresse umfasst weiterhin eine Steuereinheit, die eine Korrelationsfunktion durch Korrelieren der Sensordaten miteinander bestimmt. Diese Korrelationsfunktion und den Sensorwert des Dichtesensors im Erntegutaufnahmebereich berücksichtigend, bestimmt die Steuereinheit ein vorhergesagtes Gewicht der Erntematerial-Scheibe im Erntegutaufnahmekanal. Das vorhergesagte Gewicht wird zur Einstellung von Betriebsparametern der Quaderballenpresse herangezogen, um ein Soll-Gesamtgewicht des Ballens zu erreichen.

Ein wesentlicher Nachteil, der mit der Gewichtsmessung auf der Ballenrampe einhergeht, besteht in der geringen Häufigkeit, mit welcher das Gesamtgewicht des fertiggestellten Ballens bestimmt wird. Erst wenn der fertiggestellte Ballen vollständig auf der Ballenrampe zum Liegen kommt, wird dessen Gewicht gemessen. Währenddessen sind ein nachfolgender Ballen bereits fertiggestellt und ein weiterer Ballen ist im Entstehen begriffen. Das Verdichtungskonzept von Quaderballenpressen beruht auf einem langen Presskanal, was zu einer hohen Trägheit des Systems und damit zu einer sehr geringen Frequenz der Gewichtsrückmeldung an die Steuereinheit führt, welche die Betriebsparameter der Quaderballenpresse ansteuert. Ein weiterer negativer Einfluss ergibt sich aus Störeinflüssen durch die Bewegung der Quaderballenpresse über ein Feld. Die Quaderballenpresse wird von einem Zugfahrzeug angetrieben und über das Feld gezogen. Aufgrund von Bodenunebenheiten wird die Messgenauigkeit der Sensoren, insbesondere der Sensoren zur Gewichtsbestimmung in oder an der Ballenrampe, beeinflusst. Weitere Einflüsse resultieren aus den Betriebsbedingungen im Inneren der Quaderballenpresse. Einen direkten Einfluss auf die Genauigkeit der Messung haben die Leistung des Sensors sowie die Position des Sensors in der Quaderballenpresse. Staub und Feuchtigkeit beeinflussen die Messung ebenfalls.

Ausgehend vom vorstehend genannten Stand der Technik liegt der Erfindung die Aufgabe zugrunde, eine Quaderballenpresse sowie ein Verfahren zum Betreiben einer Quaderballenpresse weiterzubilden, welche die Nachteile des Standes der Technik vermeiden, insbesondere, dass eine Verbesserung der Genauigkeit der Gewichtsbestimmung von fertiggestellten Ballen erreicht wird.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe durch die technischen Merkmale des nebengeordneten Anspruchs 14. Die hierauf jeweils folgenden, abhängigen Ansprüche geben jeweils vorteilhafte Weiterbildungen der Erfindung wieder.

Gemäß der Erfindung wird eine Quaderballenpresse vorgeschlagen, umfassend einen Zuführkanal, der einen Einlaufbereich, in den von einer Aufnahmevorrichtung aufgenommenes Erntegut eintritt, und einen Auslaufbereich aufweist, der in einen Presskanal einmündet, in dem ein Presskolben oszillierend bewegbar ist, um Erntegut schichtweise zu einem Ballen zu verdichten, wobei in dem Zuführkanal ein Raffer zwischen einer Erntegut in dem Zuführkanal verdichtenden Sammelhubbewegung und einer das Erntegut von dem Zuführkanal in den nachgeordneten Presskanal verlagernden Füllhubbewegung umschaltbar ist, wobei ein fertiggestellter Ballen durch einen nachfolgend zu pressenden Ballen eine Verschiebung in einen rückwärtigen Bereich der Quaderballenpresse zum Auswerfen erfährt. Erfindungsgemäß ist vorgesehen, dass die Quaderballenpresse eine Steuereinheit umfasst, die dazu eingerichtet ist, Daten einer Vielzahl von Sensoren der Quaderballenpresse zu empfangen, die Betriebsparameter der Quaderballenpresse repräsentieren, und aus diesen Daten unter Verwendung eines lernfähigen, auf künstlicher Intelligenz basierenden Algorithmus ein Gewicht einer in dem Presskanal verdichteten Erntegutschicht zu bestimmen.

Der Erfindung liegt die Überlegung zugrunde, dass die Steuereinheit der Quaderballenpresse das Gewicht einzelner Erntegutschichten unabhängig von physischen Sensoren bestimmt, die hierfür im Zuführkanal und/oder im Presskanal angeordnet sein müssten. Die den lernfähigen, auf künstlicher Intelligenz basierenden Algorithmus verwendende Steuereinheit bildet einen virtuellen Sensor zur Bestimmung des Gewichts jeweils einer einzelnen Erntegutschicht während des Verdichtungsvorgangs zur Herstellung des Ballens, ohne das Gewicht direkt oder indirekt mittels physischer Sensoren im Zuführkanal und/oder im Presskanal zu messen bzw. zu bestimmen, wie es im Stand der Technik vorgesehen ist.

Hierbei können die Daten zumindest einen, vorzugsweise mehrere, Betriebsparameter aus der Gruppe von Betriebsparametern, umfassend einen Füllgrad im Zuführkanal, eine mittels des Raffers auf das Erntegut aufgebrachte Vorverdichtungskraft im Zuführkanal, eine ausgeübte Verdichtungskraft des Presskolbens, eine von dem Presskanal auf den zu fertigenden Ballen ausgeübte Druckkraft, eine Ballenverschiebung, eine Feuchtigkeit des Ballens, eine Neigung des Ballens in Längs- und/oder Querrichtung, eine Zustandsüberwachung, insbesondere der Garnspannung, an einer Knotereinrichtung, eine Fahrgeschwindigkeit, repräsentieren. Jeder dieser der Gruppe zugehörigen Betriebsparameter der Quaderballenpresse hat einen Einfluss auf den Herstellprozess des Ballens durch das schichtweise Verdichten der dem Presskanal zugeführten Erntegutschichten.

Vom Raffer und/oder dem Presskolben ausgeübte Druck- bzw. Presskräfte zur Vorverdichtung bzw. Verdichtung haben Einfluss auf die Dichte des zu fertigenden Ballens und somit auf dessen Gesamtgewicht am Ende des Herstellprozesses. Ebenso beeinflusst die Feuchtigkeit des zu verdichtenden Ernteguts das Gesamtgewicht des fertiggestellten Ballens.

Eine von dem Presskanal auf den zu fertigenden Ballen ausgeübte Druckkraft resultiert aus der Möglichkeit, vertikale Seitenwände und/oder eine horizontale Seitenwand, die den Presskanal begrenzen, bezüglich ihrer Orientierung zueinander mittels Aktoren verlagern zu können. So können die Seitenwände in Bewegungsrichtung des Ballens sich verjüngend positioniert sein. Dadurch verjüngt sich der Querschnitt des Presskanals in Richtung der Auswurföffnung des Presskanals am Heck der Quaderballenpresse, wodurch seitliche und/oder in vertikaler Richtung wirkende Kräfte auf das Erntegut und/oder den Ballen ausgeübt werden können. Eine Neigung des Ballens in Längs-und/oder Querrichtung resultiert aus Unebenheiten des Untergrunds, über welchen die Quaderballenpresse gezogen wird.

Bevorzugt kann die Steuereinheit dazu eingerichtet sein, die Bestimmung des Gewichts einer dem Presskanal zugeführten Erntegutschicht nach jedem Hub des Presskolbens durchzuführen. Dies hat den Vorteil, dass die Systemträgheit bei einer individuellen Wägung eines jeden Ballens, der den Presskanal verlassen und beispielsweise auf der Ballenrampe gewogen wird, überwunden wird. Das Bestimmen des Gewichts der einzelnen Erntegutschichten kann somit in Intervallen kleiner als 3 Sekunden erfolgen. Diese kurzen zeitlichen Abstände zwischen der jeweiligen Bestimmung des Gewichts der einzelnen Erntegutschichten, die zu einem Ballen verdichtet werden, ermöglichen eine schnellere Reaktion respektive kürzere Reaktionszeit, um das angestrebte Gesamtgewicht eines Ballens durch die Anpassung zumindest eines Betriebsparameters zu erreichen.

Gemäß einer bevorzugten Weiterbildung kann die Steuereinheit dazu eingerichtet sein, das Gesamtgewicht eines Ballens durch Aufsummierung des bestimmten Gewichts der einzelnen Erntegutschichten zu bestimmen. Hieraus kann abgeleitet werden, nach wie vielen Hüben des Presskolbens ein angestrebtes Soll-Gesamtgewicht des Ballens erreicht ist. Dabei kann das Ergebnis der abgeleiteten Anzahl von Hüben nach jedem erneuten Hub des Presskolbens verifiziert werden.

Insbesondere kann die Steuereinheit dazu eingerichtet sein, die Betriebsparameter zumindest des Raffers und des Presskolbens in Abhängigkeit von dem bestimmten Gewicht der vorhergehend verdichteten Erntegutschicht zu regeln. Dem Einfluss von Umgebungsparametern als auch von nicht hinreichend an die Betriebsbedingungen angepasster voreingestellter Betriebsparameter auf das Gesamtgewicht lässt sich somit frühzeitig begegnen. Hierdurch kann das Erreichen einer Vorgabe für ein Soll-Ballengewicht des jeweiligen Ballens genauer eingehalten werden. Die Gewichtsverteilung über alle Ballen, die während eines Herstellprozesses auf einem zu bearbeitenden Feld hergestellt werden, ist gleichmäßiger.

Bevorzugt kann die Steuereinheit zum Trainieren des Algorithmus unter Verwendung von während eines Ballenfertigungsprozesses erfassten Trainingsdaten für an der Quaderballenpresse eingestellte Betriebsparameter eingerichtet sein, wobei das Gewicht zumindest eines während des Trainingsprozesses hergestellten Ballens mittels einer von der Quaderballenpresse unabhängigen Wiegevorrichtung physisch bestimmt wird. Dies ermöglicht es, verschiedenste Arbeitsbedingungen sowie die unterschiedlichen Erntegutarten, die von der Quaderballenpresse verarbeitet werden können, durch den Algorithmus zu erlernen, um diese in einem nachfolgenden Arbeitseinsatz erfindungsgemäß nutzen zu können. Das Wiegen der während eines Trainings hergestellten Ballen dient dazu, das durch den Algorithmus bestimmte Gewicht mit dem tatsächlichen Gewicht abzugleichen. Die Verwendung einer von der Quaderballenpresse unabhängigen Wiegevorrichtung hat den Vorteil, dass das Messergebnis der Wägung sehr genau ist.

Gemäß einer Weiterbildung kann die Steuereinheit dazu eingerichtet sein, mittels des Algorithmus eine Gewichtung der die Betriebsparameter der Quaderballenpresse repräsentierenden Daten vorzunehmen. Hierdurch kann dem unterschiedlichen Einfluss der einzelnen Betriebsparameter auf das Gewicht einer einzelnen Erntegutschicht und/oder das Gesamtgewicht eines Ballens Rechnung getragen werden.

Insbesondere kann die Steuereinheit ein künstliches neuronales Netzwerk verwenden, um die Daten, welche die Betriebsparameter der Arbeitsaggregate der Quaderballenpresse repräsentieren, als Eingangsdatensätze auszuwerten und als Ausgangsdatensatz das Gewicht einer einzelnen Erntegutschicht zu bestimmen.

Des Weiteren kann die Steuereinheit dazu eingerichtet sein, das künstliche neuronale Netzwerk durch überwachtes maschinelles Lernen unter Verwendung der Daten als Eingangsdatensätze und einer definierten Ausgabe durch ein physisch bestimmtes Gewicht des zumindest einen Ballens, welches mittels einer von der Quaderballenpresse unabhängigen Wiegevorrichtung physisch bestimmt wird, zu aktualisieren und neu zu trainieren.

Insbesondere kann die Quaderballenpresse zumindest einen, insbesondere mehrere verschiedene, Sensoren aufweisen, die als zumindest ein Kraftsensor zur Überwachung der mechanischen Belastung eines Rahmens des Presskanals, ein Feuchtigkeitssensor, ein Neigungssensor, ein Lagesensor zur Bestimmung der Verschiebung eines fertigen Ballens in den rückwärtigen Bereich der Quaderballenpresse durch einen nachfolgenden Ballen und/oder zumindest eine Sensoreinrichtung zur Zustandsüberwachung der Knotereinrichtung, insbesondere der Überwachung der Garnspannung, ausgeführt sein können. Mittels des zumindest einen Sensors zur Überwachung der mechanischen Belastung des Rahmens des Presskanals lässt sich die Presskraft respektive Verdichtungskraft des Presskolbens bestimmen. Im Zuführkanal kann zumindest ein Sensor angeordnet sein, welcher den Füllgrad mit Erntegut und/oder die Homogenität der Verteilung von Erntegut im Zuführkanal überwacht. Ein Feuchtigkeitssensor kann die im gefertigten Ballen enthaltene Feuchtigkeit bestimmen.

Gemäß einer Weiterbildung kann die Steuereinheit dazu eingerichtet sein, eine Fehlfunktion oder einen vollständigen Ausfall eines Sensors mittels einer Plausibilitätsprüfung zu bestimmen, um im Fall der Bestimmung einer Fehlfunktion bei negativer Plausibilitätsprüfung der von dem defekten Sensor gesendeten Daten die Auswertung der Daten des als defekt bestimmten Sensors zu unterbinden.

Weiterhin kann die Steuereinheit dazu eingerichtet sein, den Betrieb der Quaderballenpresse bei einem Ausfall bzw. einer Fehlfunktion eines Sensors fortzuführen. Hierzu kann die das künstliche neuronale Netzwerk verwendende Steuereinheit dazu eingerichtet sein, der Ausfall des einen Sensors zu kompensieren.

Bevorzugt kann die Steuereinheit zum Empfang von Daten eines die Quaderballenpresse antreibenden Zugfahrzeugs eingerichtet sein, welche die aktuelle Fahrgeschwindigkeit repräsentieren.

Nach einer weiteren Lehre gemäß Anspruch 14, der eigenständige Bedeutung zukommt, wird ein Verfahren zum Betreiben einer Quaderballenpresse beansprucht, mit einem Zuführkanal, der einen Einlaufbereich, in den von einer Aufnahmevorrichtung aufgenommenes Erntegut eintritt, und einen Auslaufbereich aufweist, der in einen Presskanal einmündet, in dem ein Presskolben oszillierend bewegt wird, um Erntegut schichtweise zu einem Ballen zu verdichten, wobei in dem Zuführkanal ein Raffer zwischen einer Erntegut in dem Zuführkanal verdichtenden Sammelhubbewegung und einer das Erntegut von der Zuführkanal in den nachgeordneten Presskanal verlagernden Füllhubbewegung umgeschaltet wird, wobei ein fertiggestellter Ballen durch einen nachfolgend zu pressenden Ballen in einen rückwärtigen Bereich der Quaderballenpresse zum Auswerfen verschoben wird. Dabei ist erfindungsgemäß vorgesehen, dass Daten einer Vielzahl von Sensoren der Quaderballenpresse von einer Steuereinheit empfangen werden, die Betriebsparameter der Quaderballenpresse repräsentieren, und dass aus diesen Daten mittels eines lernfähigen, auf künstlicher Intelligenz basierenden Algorithmus ein Gewicht einer in dem Presskanal verdichteten Erntegutschicht bestimmt wird. Es darf auf alle Ausführungen zu dem vorschlagsgemäßen landwirtschaftlichen Arbeitssystem verwiesen werden.

Insbesondere kann das Gewicht eines von der Quaderballenpresse hergestellten Ballens unabhängig von einem Vorhandensein eines physischen Sensors zur Gewichtsbestimmung an der Quaderballenpresse durchgeführt werden, indem das Gesamtgewicht des hergestellten Ballens durch Aufsummierung des für die einzelnen Erntegutschichten bestimmten Gewichts bestimmt wird.

Die vorliegende Erfindung wird nachstehend anhand eines in den Zeichnungen dargestellten Ausführungsbeispieles näher erläutert.

Es zeigen:
- Fig. 1: eine schematische Seitenansicht einer Kombination aus einer landwirtschaftlichen Quaderballenpresse und einem Zugfahrzeug;
- Fig. 2: schematisch und exemplarisch ein Blockdiagramm eines Steuerungssystems für die Quaderballenpresse;
- Fig. 3: ein schematisches Diagramm eines künstlichen neuronalen Netzwerks zur Bestimmung des Gewichts einer Erntegutschicht; und
- Fig. 4: ein vereinfachtes Flussdiagramm zur Veranschaulichung des Verfahrens zur Bestimmung des Gesamtgewichts eines Ballens.

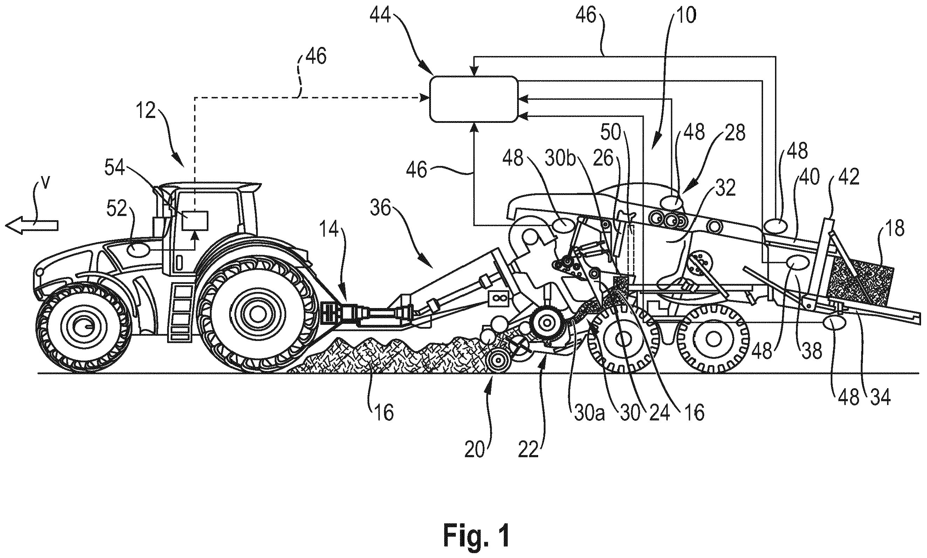

Fig. 1 zeigt in einer schematischen Seitenansicht eine Kombination aus einer landwirtschaftlichen Quaderballenpresse 10 und einem Traktor 12 als Zugfahrzeug, wobei die Quaderballenpresse 10 von dem Traktor 12 über ein Feld gezogen wird. Der Traktor 12 weist heckseitig einen an sich bekannten Zapfwellenabtrieb 14 auf, über den die Quaderballenpresse 10 mit mechanischer Antriebsenergie versorgt werden kann. Zur Verarbeitung von Erntegut 16 zu Quaderballen 18, nachfolgend als Ballen bezeichnet, weist die Quaderballenpresse 10 Arbeitsaggregate wie eine als Pickup ausgeführte Aufnahmevorrichtung 20, einen Schneidrotor 22, einen Raffer 24, einen Presskolben 26 und eine Knotereinrichtung 28 auf, durch welche das Erntegut 16 gefördert und/oder bearbeitet wird. Dabei dient die Aufnahmevorrichtung 20 dazu, auf dem Feldboden - zumeist in Form eines sogenannten Schwads - liegendes Erntegut 16 aufzunehmen und dieses den nachgelagerten Förder- und/oder Verarbeitungsaggregaten zuzuführen.

Das so aufgenommene Erntegut 16 erreicht nach Verlassen der Aufnahmevorrichtung 20 den Schneidrotor 22, welcher eine weitere Zerkleinerung des Ernteguts 16 bewirkt. Anschließend gelangt das Erntegut 16 in einen Zuführkanal 30, in welchem der Raffer 24 durch periodische Füll- und Sammelhubbewegungen eine Vorverdichtung des Erntegutes 16 und eine Förderung des Ernteguts 16 in einen Presskanal 32 durchführt. Hierzu weist der Zuführkanal 30 einen Einlaufbereich 30a, in den das von der Aufnahmevorrichtung 20 aufgenommenes Erntegut 16 eintritt, und einen Auslaufbereich 30b auf, der in den Presskanal 32 einmündet. In dem Presskanal 32 ist der Presskolben 26 translatorisch beweglich gelagert, welcher über einen Presskolbenantrieb in oszillierende Bewegungen versetzt wird. Der in dem Presskanal 32 oszillierend bewegbare Presskolben 26 verdichtet das Erntegut 16 schichtweise zu einem Ballen 18. Hierzu ist in Fig. 1 beispielhaft eine einzelne Erntegutschicht 50 strichliniert dargestellt, die vom Raffer 24 in den Presskanal 32 gefördert und durch den Presskolben 26 gegen einen - nicht dargestellten - im Entstehen begriffenen Ballen 18 oder einen bereits fertig gepressten Ballen 18 gepresst wird. Fertig gepresste Ballen 18 werden heckseitig aus der Ballenpresse 10 über eine Ballenrampe 34 auf das Feld abgeworfen.

Die Arbeitsaggregate der Ballenpresse 10, insbesondere die Aufnahmevorrichtung 20, der Schneidrotor 22, der Raffer 24, der Presskolben 26 sowie die oberhalb des Presskanals 32 angeordnete Knotereinrichtung 28 werden mittels eines zentralen Antriebsstrangs 36 der Quaderballenpresse 10 angetrieben. Die Presskammer 32 weist seitlich zwei einander gegenüberliegend angeordnete Seitenwände 38, sowie eine die Presskammer 32 oberseitig begrenzende Druckplatte 40 auf. Die Seitenwände 38 und die Druckplatte 40 sind an einem Rahmen 42 außenseitig abgestützt und können in Richtung der Presskammer 32, beispielsweise hydraulisch, verschwenkt oder verlagert werden, um die Presskräfte der Seitenwände 38 und/oder der Druckplatte 40 zu verändern, damit während des wiederholten Pressens des Presskolbens 26 ein Ballen 18 geformt werden kann.

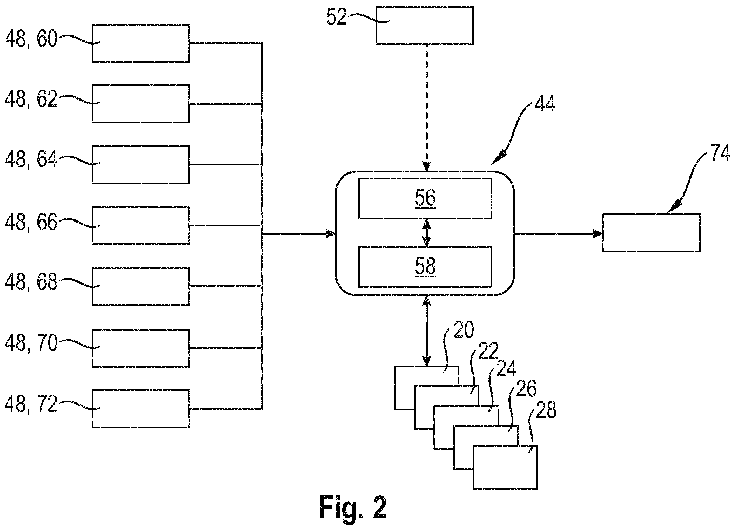

Weiterhin ist eine Steuereinheit 44 vorgesehen, welche vorzugsweise an bzw. in der Quaderballenpresse 10 angeordnet ist. Die Steuereinheit 44 ist dazu eingerichtet, die Arbeitsaggregate der Ballenpresse 10 anzusteuern. Hierzu steht die Steuereinheit 44 vorzugsweise durch ein - nicht dargestelltes - Bussystem mit den Arbeitsaggregaten der Ballenpresse 10 in Verbindung. Die Steuereinheit 44 ist durch drahtlose oder drahtgebundene Kommunikationsmittel 46 mit einer Vielzahl von unterschiedlichen Sensoren 48 der Quaderballenpresse 10 verbunden. Die Sensoren 48 sind dazu eingerichtet, Daten zu generieren, die Betriebsparameter der Quaderballenpresse 10 repräsentieren. Die Steuereinheit 44 empfängt diese Daten und wertet diese aus. Die Funktion der verschiedenen Sensoren 48 wird weiter unten anhand der Fig. 2 näher erläutert.

Die Daten repräsentieren zumindest einen Betriebsparameter aus der Gruppe von Betriebsparametern der Quaderballenpresse 10, umfassend einen mittels des Raffers 24 auf das im Zuführkanal 30 befindliche Erntegut 16 aufgebrachten Druck, eine ausgeübte Presskraft des Presskolbens 26, eine von dem Presskanal 32 auf den zu fertigenden Ballen 18 ausgeübte Druckkraft, eine Ballenverschiebung, eine Feuchtigkeit des Ballens, eine Neigung des Ballens in Längs- und/oder Querrichtung, eine Zustandsüberwachung an einer Knotereinrichtung, eine Fahrgeschwindigkeit. Mit Ausnahme der Fahrgeschwindigkeit werden die Daten der übrigen Betriebsparameter der Quaderballenpresse 10 unmittelbar an dieser durch die verschiedenen Sensoren 48 erhoben. Daten zur Fahrgeschwindigkeit können von einem geeigneten Sensor 52 des Traktors 12 bestimmt und an eine Steuerungsvorrichtung 54 des Traktors 12 übertragen und von dieser ausgewertet werden. Diese kann die aktuelle Fahrgeschwindigkeit an die Steuereinheit 44 der Quaderballenpresse 10 übermitteln.

In Fig. 2 ist schematisch und exemplarisch ein Blockdiagramm eines Steuerungssystems für die Quaderballenpresse 10 dargestellt. Ein Sensor 48 kann als Kraftsensor 60 ausgeführt sein, um Daten über die mechanische Belastung des Rahmens des Presskanals 32 zu generieren. Ein weiterer Sensor 48 kann als ein Feuchtigkeitssensor 62 ausgeführt sein, welcher Daten zur Bestimmung der Erntegutfeuchtigkeit generiert. Ein weiterer Sensor 48 kann als ein Neigungssensor 64 ausgeführt sein, welcher Daten über die Längs- und/oder Querneigung der Quaderballenpresse 10 generiert. Ein weiterer Sensor 48 kann als ein Lagesensor 66 ausgeführt sein, welcher Daten zur Bestimmung der Verschiebung eines fertigen Ballens 18 in den rückwärtigen Bereich der Quaderballenpresse 10 generiert. Ein weiterer Sensor 48 kann als eine Sensoreinrichtung 68 zur Zustandsüberwachung der Knotereinrichtung 28 ausgeführt sein. Insbesondere kann die Sensoreinrichtung 68 einen Garnspannungssensor 70 umfassen. Ein weiterer Sensor 48 kann als Drucksensor 72 oder Positionssensor ausgeführt sein, welcher Daten über die Stellung oder die auf den Ballen 18 ausgeübten Druckkräfte der Seitenwände 38 und der Druckplatte 40 generiert. Allen vorstehend aufgelisteten Sensoren 48 ist gemeinsam, dass sie mit der Ernteschicht 50 im Presskanal 32, deren Gewicht bestimmt werden soll, keinen unmittelbaren Kontakt haben und keine für die einzelne Ernteschicht 50 spezifische Messdaten erheben. Die von den Sensoren 48 generierten Daten werden an die Steuereinheit 44 übertragen. Die Steuereinheit 44 umfasst eine Prozessoreinheit 56 und eine Speichereinheit 58. Die Speichereinheit 58 speichert Daten und Anweisungen, welche, wenn diese von der Prozessoreinheit 56 ausgeführt werden, die Funktionalität der Steuereinheit 44 bereitstellen. Wie weiter in Fig. 2 dargestellt, steht die Steuereinheit 44 mit den verschiedenen Arbeitsaggregaten der Quaderballenpressen 10, der Aufnahmevorrichtung 20, dem Schneidrotor 22, dem Raffer 24, dem Presskolben 26 und der Knotereinrichtung 28, signaltechnisch in Verbindung, um diese anzusteuern. Zu den Arbeitsaggregaten zählen auch Aktoren, die der Verstellung der Seitenwände 38 und der Druckplatte 40 dienen.

Die Steuereinheit 44 ist dazu eingerichtet, aus den von den Sensoren 48, 52 bereitgestellten Daten unter Verwendung eines lernfähigen, auf künstlicher Intelligenz basierenden Algorithmus ein Gewicht 74 einer in dem Presskanal 32 verdichteten Erntegutschicht 50 zu bestimmen.

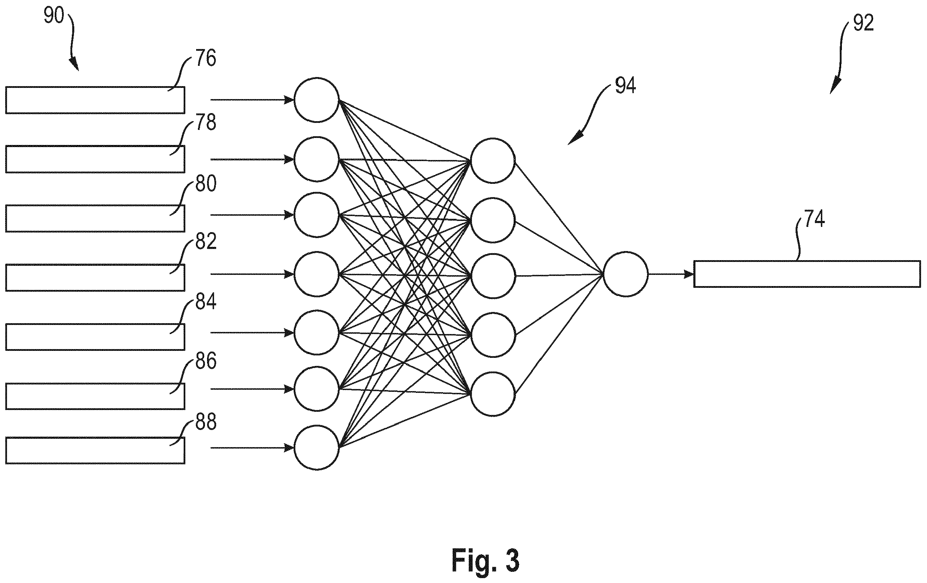

Fig. 3 zeigt ein schematisches Diagramm eines künstlichen neuronalen Netzwerks 94 zur Bestimmung des Gewichts 74 einer Erntegutschicht 50. Darin bilden zumindest einige der sensorisch erfassten Daten zur Vorverdichtungskraft 76 im Zuführkanal 30, Verdichtungskraft 78 im Presskanal 32, durch den Presskanal 32 ausgeübte Druckkraft 80, Feuchtigkeit 82 des Erntegutes 16, Neigung 84 in Längs- und/oder Querrichtung, Garnspannung 86 sowie eine Fahrgeschwindigkeit 88 Eingangsdatensätze 90 des neuronalen Netzwerks 94 und das zu bestimmende Gewicht 74 einer in dem Presskanal 32 verdichteten Erntegutschicht 50 bildet einen Ausgangsdatensatz 92. Das beispielhaft dargestellte künstliche neuronale Netzwerk 94 wird darauf trainiert, basierend auf diesen Eingangsdatensätzen 90 ein geschätztes Gewicht 74 einer Erntegutschicht 50 als Ausgangsdatensatz 92 zu generieren.

Gemäß einer Weiterbildung kann die Steuereinheit 44 dazu eingerichtet sein, mittels des Algorithmus eine Gewichtung der die Betriebsparameter der Quaderballenpresse 10 repräsentierenden Daten vorzunehmen. Hierdurch kann dem unterschiedlichen Einfluss der einzelnen Betriebsparameter auf das Gewicht 74 einer einzelnen Erntegutschicht 50 und/oder das angestrebte Gesamtgewicht eines fertigen Ballens 18 Rechnung getragen werden.

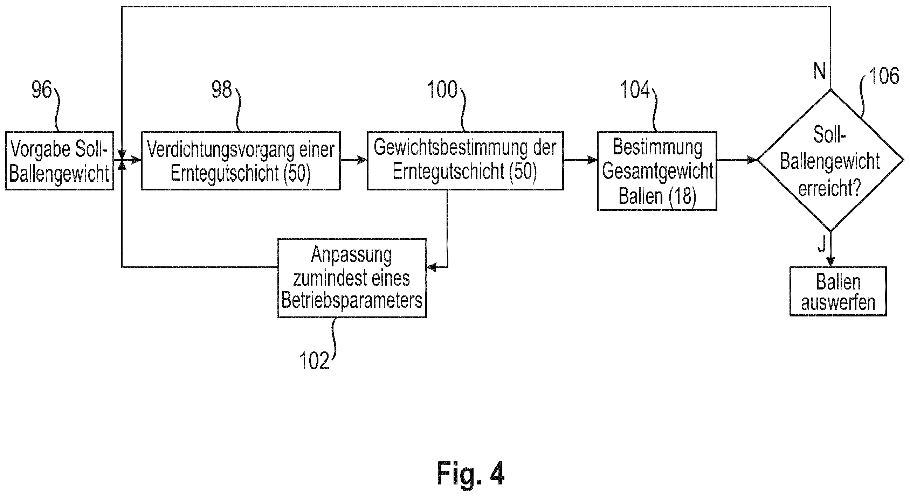

Die Darstellung in Fig. 4 zeigt ein vereinfachtes Flussdiagramm zur Veranschaulichung des Verfahrens zur Bestimmung des Gesamtgewichts eines mittels der Quaderballenpresse 10 hergestellten Ballens 18. In einem ersten Schritt 96 kann von einer Bedienperson eine Vorgabe für das angestrebte Soll-Ballengewicht als Sollvorgabe getätigt werden. Dies kann durch eine Eingabe mittels einer Eingabevorrichtung erfolgen, die mit der Steuereinheit 44 verbunden oder dieser zugeordnet ist oder alternativ durch eine Eingabe-Ausgabevorrichtung, die der Steuerungsvorrichtung 54 des Traktors 12 zugeordnet ist.

Im zweiten Schritt 98 befindet sich die Quaderballenpresse im Herstellungsprozess eines Ballens 18, in welchem der Ballen 18 schichtweise aus dem vom Raffer 24 vorverdichteten und dem Presskanal 32 zugeführten Erntegut 16 aufgebaut wird.

Im dritten Schritt 100 wird nach jedem Verdichtungsvorgang einer einzelnen Erntegutschicht 50 eine Gewichtsbestimmung der Erntegutschicht 50 mittels des Algorithmus durchgeführt. Bevorzugt kann die Steuereinheit 44 dazu eingerichtet sein, die Bestimmung des Gewichts 74 einer dem Presskanal 32 zugeführten Erntegutschicht 50 nach jedem Hub des Presskolbens 26 durchzuführen. Dies hat den Vorteil, dass die Systemträgheit bei einer individuellen Wägung eines jeden Ballens, der den Presskanal verlassen und beispielsweise erst auf der Ballenrampe 34 gewogen wird, überwunden wird. Das Bestimmen des Gewichts 74 der einzelnen Erntegutschichten 50 kann somit in Intervallen kleiner als 3 Sekunden erfolgen. Diese kurzen zeitlichen Abstände zwischen der jeweiligen Bestimmung des Gewichts 74 von einzelnen Erntegutschichten 50 ermöglicht eine schnellere Reaktion, um das angestrebte Gesamtgewicht eines Ballens 18 durch die Anpassung zumindest eines Betriebsparameters zu erreichen. Mittels der individuellen Bestimmung des Gewichts 74 von einzelnen Erntegutschichten 50 lässt sich frühzeitig erkennen, ob das Soll-Ballengewicht mit den bestehenden Einstellungen der Arbeitsaggregate erreichen lässt. Dies ermöglicht es, nach jeder einzelnen Bestimmung des Gewichts 74 einer Erntegutschicht 50 die Betriebsparameter zumindest eines der Arbeitsaggregate anzupassen, was im Zuge eines vierten Schrittes 102 durchgeführt wird.

In einem fünften Schritt 104 werden die bestimmten Einzelwerte des Gewichts 74 der Erntegutschichten 50 zur Bestimmung des Gesamtgewichts des Ballens 18 aufaddiert und mit dem vorgegebenen Soll-Ballengewicht verglichen. Die Ausführung des vierten Schrittes 104 kann vorbehaltlich einer Mindestanzahl von Verdichtungsvorgängen durchgeführt werden.

In einem sechsten Schritt 106 kann das im fünften Schritt 104 bestimmte Gesamtgewicht des Ballens 18 mit dem vorgegebenen Soll-Ballengewicht verglichen werden. Ist das Soll-Ballengewicht erreicht, wird der gefertigte Ballen 18 nach dem Bindevorgang durch die Knotereinrichtung 28 durch einen nachfolgenden zu pressenden Ballen 18 in Richtung der Ballenrampe 34 bewegt. Verneinendenfalls wird vor den Schritt 98 zurückgesprungen, um dem zu fertigen Ballen 18 eine oder mehrere weitere Erntegutschichten 50 hinzuzufügen.

Gemäß einer Weiterbildung kann die Steuereinheit 44 dazu eingerichtet sein, eine Fehlfunktion oder einen vollständigen Ausfall eines Sensors 48 mittels einer Plausibilitätsprüfung zu bestimmen, um im Fall der Bestimmung einer Fehlfunktion bei negativer Plausibilitätsprüfung der von dem defekten Sensor 48 gesendeten Daten die Auswertung der Daten des als defekt bestimmten Sensors 48 zu unterbinden.

Weiterhin kann die Steuereinheit 44 dazu eingerichtet sein, den Betrieb der Quaderballenpresse 10 bei einem Ausfall bzw. einer Fehlfunktion eines Sensors 48 fortzuführen. Dabei kann die Steuereinheit 44 in einem reduzierten Modus betrieben werden, wobei aufgrund der Vielzahl unterschiedlicher Sensoren 48, deren Daten von dem neuronalen Netzwerk 94 verarbeitet werden, es ermöglicht wird, die Fehlfunktion bzw. den Ausfall zumindest eines Sensors 48 zu kompensieren, um mit ausreichend hoher Genauigkeit die Quaderballenpresse 10 weiterbetreiben zu können. Somit kann ein Austausch des defekten Sensors 48 auch nach Abschluss der durchzuführenden Feldarbeiten, beispielsweise am Ende eines Tages, erfolgen.

Insbesondere ist aufgrund der Verwendung mehrerer Sensoren 48 zur Ermittlung des Gewichts 74 der Erntegutschichten 50 und dann des Ballens 18 das System respektive das Verfahren weniger anfällig für Abweichungen, die von den Sensoren 48 selbst herrühren.

**Bezugszeichenliste**

| | | | |
|---|---|---|---|
| 10 | Quaderballenpresse | 72 | Drucksensor |
| 12 | Traktor | 74 | Gewicht von 50 |
| 14 | Zapfwellenabtrieb | 76 | Vorverdichtungskraft |
| 16 | Erntegut | 78 | Verdichtungskraft |
| 18 | Ballen | 80 | Druckkraft |
| 20 | Aufnahmevorrichtung | 82 | Feuchtigkeit |
| 22 | Schneidrotor | 84 | Neigung |
| 24 | Raffer | 86 | Garnspannung |
| 26 | Presskolben | 88 | Fahrgeschwindigkeit |
| 28 | Knotereinrichtung | 90 | Eingangsdatensatz |
| 30 | Zuführkanal | 92 | Ausgangsdatensatz |
| 30a | Einlaufbereich | 94 | Neuronales Netzwerk |
| 30b | Auslaufbereich | 96 | Erster Schritt |
| 32 | Presskanal | 98 | Zweiter Schritt |
| 34 | Ballenrampe | 100 | Dritter Schritt |
| 36 | Antriebsstrang | 102 | Vierter Schritt |
| 38 | Seitenwand | 104 | Fünfter Schritt |
| 40 | Druckplatte | 106 | Sechster Schritt |
| 42 | Rahmen | | |
| 44 | Steuereinheit | | |
| 46 | Kommunikationsmittel | | |
| 48 | Sensor | | |
| 50 | Erntegutschicht | | |
| 52 | Sensor | | |
| 54 | Steuerungsvorrichtung | | |
| 56 | Prozessoreinheit | | |
| 58 | Speichereinheit | | |
| 60 | Kraftsensor | | |
| 62 | Feuchtigkeitssensor | | |
| 64 | Neigungssensor | | |
| 66 | Lagesensor | | |
| 68 | Sensoreinrichtung | | |
| 70 | Garnspannungssensor | | |

## Patentansprüche

1. Quaderballenpresse (10), umfassend einen Zuführkanal (30), der einen Einlaufbereich (30a), in den von einer Aufnahmevorrichtung (20) aufgenommenes Erntegut (16) eintritt, und einen Auslaufbereich (30b) aufweist, der in einen Presskanal (32) einmündet, in dem ein Presskolben (26) oszillierend bewegbar ist, um Erntegut (16) schichtweise zu einem Ballen (18) zu verdichten, wobei in dem Zuführkanal (30) ein Raffer (24) zwischen einer Erntegut (16) in dem Zuführkanal (30) verdichtenden Sammelhubbewegung und einer das Erntegut (16) von dem Zuführkanal (30) in den nachgeordneten Presskanal (32) verlagernden Füllhubbewegung umschaltbar ist, wobei ein fertiggestellter Ballen (18) durch einen nachfolgend zu pressenden Ballen (18) eine Verschiebung in einen rückwärtigen Bereich der Quaderballenpresse (10) zum Auswerfen erfährt, **dadurch gekennzeichnet, dass** die Quaderballenpresse (10) eine Steuereinheit (44) umfasst, die dazu eingerichtet ist, Daten einer Vielzahl von Sensoren (48) der Quaderballenpresse (10) zu empfangen, die Betriebsparameter der Quaderballenpresse (10) repräsentieren, und aus diesen Daten unter Verwendung eines lernfähigen, auf künstlicher Intelligenz basierenden Algorithmus ein Gewicht (74) einer in dem Presskanal (32) verdichteten Erntegutschicht (50) zu bestimmen.

2. Quaderballenpresse (10) nach Anspruch 1, **dadurch gekennzeichnet, dass** die Daten zumindest einen Betriebsparameter aus einer Gruppe von Betriebsparametern der Quaderballenpresse (10), umfassend eine mittels des Raffers (24) auf das im Zuführkanal (30) befindliche Erntegut (16) aufgebrachte Vorverdichtungskraft (76), eine ausgeübte Verdichtungskraft (78) des Presskolbens (26), eine von dem Presskanal (32) auf den zu fertigenden Ballen (18) ausgeübte Druckkraft (80), eine Ballenverschiebung, eine Feuchtigkeit (82) des Ballens, eine Neigung (84) des Ballens in Längs- und/oder Querrichtung, eine Zustandsüberwachung, insbesondere der Garnspannung (86), an einer Knotereinrichtung (28), eine Fahrgeschwindigkeit (88), repräsentieren.

3. Quaderballenpresse (10) nach Anspruch 1 oder 2, **dadurch gekennzeichnet, dass** die Steuereinheit (44) dazu eingerichtet ist, die Bestimmung des Gewichts (74) einer dem Presskanal (32) zugeführten Erntegutschicht (50) nach jedem Hub des Presskolbens (26) durchzuführen.

4. Quaderballenpresse (10) nach einem der Ansprüche 1 bis 3, **dadurch gekennzeichnet, dass** die Steuereinheit (44) dazu eingerichtet ist, die Betriebsparameter zumindest des Raffers (24) und des Presskolbens (26) in Abhängigkeit von dem bestimmten Gewicht (74) der zumindest einen verdichteten Erntegutschicht (50) zu regeln.

5. Quaderballenpresse (10) nach einem der Ansprüche 1 bis 4, **dadurch gekennzeichnet, dass** die Steuereinheit (44) dazu eingerichtet ist, das Gesamtgewicht eines Ballens (18) durch Aufsummierung des bestimmten Gewichts (74) der einzelnen Erntegutschichten (50) zu bestimmen.

6. Quaderballenpresse (10) nach einem der Ansprüche 1 bis 5, **dadurch gekennzeichnet, dass** die Steuereinheit (44) zum Trainieren des Algorithmus unter Verwendung von während eines Ballenfertigungsprozesses erfassten Trainingsdaten für eingestellte Betriebsparameter eingerichtet ist, wobei das Gewicht zumindest eines während des Trainingsprozesses hergestellten Ballens (18) mittels einer von der Quaderballenpresse (10) unabhängigen Wiegevorrichtung physisch bestimmt wird.

7. Quaderballenpresse (10) nach einem der Ansprüche 1 bis 6, **dadurch gekennzeichnet, dass** die Steuereinheit (44) dazu eingerichtet ist, mittels des Algorithmus eine Gewichtung der die Betriebsparameter der Quaderballenpresse (10) repräsentierenden Daten vorzunehmen.

8. Quaderballenpresse (10) nach einem der Ansprüche 1 bis 7, **dadurch gekennzeichnet, dass** die Steuereinheit (44) ein künstliches neuronales Netzwerk (94) verwendet, um die Daten, welche die Betriebsparameter repräsentieren, als Eingangsdatensatz (90) auszuwerten und als Ausgangsdaten (92) das Gewicht (74) einer einzelnen Erntegutschicht (50) zu bestimmen.

9. Quaderballenpresse (10) nach Anspruch 8, **dadurch gekennzeichnet, dass** die Steuereinheit (44) dazu eingerichtet sein, das künstliche neuronale Netzwerk (94) durch überwachtes maschinelles Lernen unter Verwendung der Daten als Eingangsdaten (90) und einer definierten Ausgabe durch ein physisch bestimmtes Gewichts des zumindest einen Ballens (18), welches mittels einer von der Quaderballenpresse (10) unabhängigen Wiegevorrichtung physisch bestimmt wird, zu aktualisieren und neu zu trainieren.

10. Quaderballenpresse (10) nach einem der Ansprüche 1 bis 9, **dadurch gekennzeichnet, dass** die Quaderballenpresse (10) zumindest einen, insbesondere mehrere verschiedene, Sensoren (48) aufweist, die als zumindest ein Kraftsensor (60) zur Überwachung der mechanischen Belastung eines Rahmens (42) des Presskanals (32), ein Feuchtigkeitssensor (62), ein Neigungssensor (44), ein Lagesensor (64) zur Bestimmung der Verschiebung eines fertigen Ballens in den rückwärtigen Bereich der Quaderballenpresse (10) durch einen nachfolgenden Ballen (18) und/oder eine Sensoreinrichtung (68, 70) zur Überwachung einer Knotereinrichtung (28) ausgeführt sind.

11. Quaderballenpresse (10) nach Anspruch 10, **dadurch gekennzeichnet, dass** die Steuereinheit (44) dazu eingerichtet ist, eine Fehlfunktion oder einen vollständigen Ausfall eines Sensors (48) mittels einer Plausibilitätsprüfung zu, um im Fall der Bestimmung einer Fehlfunktion bei negativer Plausibilitätsprüfung der von dem defekten Sensor (48) gesendeten Daten die Auswertung der Daten des als defekt bestimmten Sensors (48) zu unterbinden.

12. Quaderballenpresse (10) nach Anspruch 11, **dadurch gekennzeichnet, dass** die Steuereinheit (44) dazu eingerichtet ist, den Betrieb der Quaderballenpresse (10) bei einem Ausfall bzw. einer Fehlfunktion eines Sensors (48) fortzuführen.

13. Quaderballenpresse (10) nach einem der Ansprüche 2 bis 12, **dadurch gekennzeichnet, dass** die Steuereinheit (44) zum Empfang von Daten eines die Quaderballenpresse (10) antreibenden Zugfahrzeugs (12) eingerichtet ist, welche die aktuelle Fahrgeschwindigkeit repräsentieren.

14. Verfahren zum Betreiben einer Quaderballenpresse (10), mit einem Zuführkanal (22), der einen Einlaufbereich (30a), in den von einer Aufnahmevorrichtung (20) aufgenommenes Erntegut (16) eintritt, und einen Auslaufbereich (30b) aufweist, der in einen Presskanal (32) einmündet, in dem ein Presskolben (26) oszillierend bewegt wird, um Erntegut (16) schichtweise zu einem Ballen (18) zu verdichten, wobei in dem Zuführkanal (30) ein Raffer (24) zwischen einer Erntegut (16) in dem Zuführkanal (30) verdichtenden Sammelhubbewegung und einer das Erntegut (16) von dem Zuführkanal (30) in den nachgeordneten Presskanal (32) verlagernden Füllhubbewegung umgeschaltet wird, wobei ein fertiggestellter Ballen (18) durch einen nachfolgend zu pressenden Ballen (18) in einen rückwärtigen Bereich der Quaderballenpresse (10) zum Auswerfen verschoben wird, **dadurch gekennzeichnet, dass** Daten einer Vielzahl von Sensoren (48) der Quaderballenpresse (10) von einer Steuereinheit (44) empfangen werden, die Betriebsparameter der Quaderballenpresse (10) repräsentieren, und dass aus diesen Daten mittels eines lernfähigen, auf künstlicher Intelligenz basierenden Algorithmus ein Gewicht (74) einer in dem Presskanal (32) verdichteten Erntegutschicht (50) bestimmt wird.

15. Verfahren nach Anspruch 14, **dadurch gekennzeichnet, dass** das Gewicht eines von der Quaderballenpresse (10) hergestellten Ballens (18) unabhängig von einem Vorhandensein eines physischen Sensors zur Gewichtsbestimmung an der Quaderballenpresse (10) durchgeführt wird, indem das Gesamtgewicht des hergestellten Ballens (18) durch Aufsummierung des für die einzelnen Erntegutschichten (50) bestimmten Gewichts (74) bestimmt wird.
